# EUROPEAN PATENT APPLICATION

(11) **EP 1 128 675 A2**
(43) Date of publication of application: **29.08.2001**
(21) Application number: 01301577.1
(22) Date of filing: 21.02.2001
(51) Int. Cl.: H04N 7/173

(54) **Charged rent distribution system for contents information and method thereof**

(30) Priority: 22.02.2000 JP 2000044745
(71) Applicant: SONY CORPORATION, Tokyo 141 (JP)
(72) Inventor: Otsuka, Masaya, c/o Intellectual Property Departm., Shinagawa-ku, Tokyo 141 (JP)
(74) Representative: Turner, James Arthur

(57) **Abstract**

A specific contents information is distributed from an information supply station 20 to a terminal apparatus 30 via a communication network 60. Further, a terminal apparatus 30-1 owned by the owner of such a recorded medium recorded with a contents information secondarily distributes the contents information to another terminal apparatus 30. Next, the terminal apparatus 30-1 delivers a media owner data to the information supply station 20. The terminal apparatus 30 feeds a rent charged reference data designating the state of utilizing distributed contents information whenever a predetermined period of time is past. The information supply station 20 generates a utilization data designating actual condition of utilization per contents information and individual names of users for delivery to an information provider 10. Based on the delivered data, the information provider 10 charges individual users for payment of the rent. The information provider 10 distributes part of the rent charges collected from individual information users via the rent charging procedure to the owners of the corresponding recorded-media.

## Description

The present invention relates to a charged rent distribution system for contents information.

As a result of significant development of a digital communication and information processing technologies promoted in recent years, it is already practicable to integratively deal with a variety of digital contents information such as picture images, audio sounds, or text data, for example. In the field of distribution of contents information, a distribution system is proposed not only for the sale of recorded-media recorded with music tunes or movies, magazines and the like, but also for receiving system that enables individual users to receive a wide variety of contents information including digital musical tunes and works, digital movies, digital magazines, or the like, via communication networks.

Nevertheless, when actually constructing such a system for distributing a wide variety of digital contents information, inasmuch as the contents of information subject to distribution are fully converted into digital format, perfect replica may easily and inexhaustibly be produced. This will generate a great advantage on the part of users, but conversely, this will in turn raise a grave concern on the part of those who provide copyrighted works because of the need to protect own copyrights. To deal with this critical problem, when distributing digital contents information, it is imperative that such a system capable of fully protecting copyrights without substantially degrading individual characteristics of digital information contents be secured.

As a practical method for protecting copyrights, for example, such a method called "Super-distribution" is proposed. Detail of this method is described in a publication of Electronic Data Communication Academy of Japan, i.e., under the title "Proposal on Software Service System" proposed by Ryoichi Mori and Hidekazu Tashiro, as cited in Vol. J70D, No. 1, pp 70 ~ 81 via the title "Super-distribution" written by Ryoichi Mori and Masaji Kawahara in reference to "The concept and the architecture", trans. of IEICE, vol. E73, No. 7, pp 1133 ~ 1146.

According to the above-cited "Super-distribution" system, specific users utilizing the software are charged for payment of usage, whereas the software is distributed free of charge. Concretely, the proposed "Super-distribution" system stipulates the following terms:
(1) Anyone who utilizes digital contents information shall be allowed to obtain the digital information substantially at free of charge, and yet, in addition to purchase of any digital contents information from a retail shop, delivery of a copy of any digital contents information from a third party is also permissible.
(2) Each terminal apparatus owned by an individual information user shall incorporate such an apparatus for managing accounting procedure to enable the charge controlling apparatus to record actual rounds of utilizing digital information every time, whereby each user is charged for payment of the usage in correspondence with the actual rounds of the usage of digital contents information recorded by the charge controlling apparatus.
(3) Anyone who utilizes digital contents information shall be subject to purchase of such a data (called as a "common credit card") designating the rounds of usable amount of the digital contents information by means of a pre-paid card or a credit card in order to enable the user to properly utilize digital contents information by way of inserting the prescribed card into the corresponding user terminal apparatus.

By way of constructing such a system capable of charging the rent solely against the act of utilizing software without charging the user simply on account of the possession of software as cited above, it is practicable to not only protect copyrights, but it is also practicable to extremely decrease distribution cost and substantial cost of software per unit by way of positively utilizing inherent characteristics of digital contents information which are free from incurring degradation from the original quality of digital information even after being copied by any available means.

On the other hand, in the case of distributing digital contents information via the above-cited system, any user requiring specific contents information connects his computer terminal apparatus to an information supply station which distributes a variety of contents information via a communication network, and then the user downloads the desired contents information stored at the connected information supply station. This in turn obliges the user to be subject to payment of the rent for utilization of the downloaded information contents. As a conventional practice, digital contents information recorded on a recorded medium such as a CD (Compact Disc) or a DVD (Digital Versatile Disc) are commercially available in the market. This in turn means that an equivalent amount of money is paid against the act of possessing the corresponding information contents. Actual meaning of the payment for the possession of required contents information gradually fades away as the charging of the rent on the utilization of specific information contents generally becomes a conventional tendency.

Various respective aspects and features of the invention are defined in the appended claims.

Embodiments of the invention provide a system for distributing charges imposed on a utilization of the contents information. More particularly, the present invention relates to such a system which, on receipt of an information for usage of contents of the contents information. After that based on the information of a media-owner database integrally storing an owner ID information pertaining to the owner of the recorded-media, a media ID information inherent to the recorded-media, and contents ID information pertaining to specific contents information recorded on the recorded-media, this system distributes at least a part of the charged money for utilization of contents information collected from individuual users of the contents information to the owners of relevant recorded-media.
The present invention provides such a system for charging individual users for payment of the rent for utilization of digital contents information, and yet, enables the system to continuously follow up distribution of recorded-media by way of refunding part of the collected rent charges to owners of recorded-media recorded with digital contents information.

The system for distributing the rent charges imposed on the utilization of digital contents information of this invention essentially comprises: a recorded media owner database integrally storing an owner ID (IDentification) data related to owners in possession of recorded-media, a media ID data inherent to recorded-media, and a contents ID data pertaining to specific contents information recorded on recorded-media; a data receiving means for receiving a contents utilizing data designating the act of individual users executed for downloading specific contents information via a communication network; a rent charging means for charging the rent on the utilized contents information against individual users based on the received data pertaining to the utilization of contents information; and a distributing means for distributing at least a part of the rent imposed on the utilization of contents information collected from individual users based on the media owner database as a result of implementing the above-referred rent charging procedure.

The system for distributing the rent imposed on the utilization of contents information of this invention further comprises: a data receiving means for receiving a contents utilized data designating the act of individual users executed for utilizing specific contents information via a communication network; a rent charging means for charging the rent on the utilization of contents information against individual users based on the received data pertaining to the users of contents information; and a distributing means for distributing at least a part of the rent imposed on the utilization of contents information collected from individual users via the rent charging means for refunding a part of the rent charges to the owners of the recorded-media based on a data from a media owner database integrally storing an owner ID data related to the owners in possession of recorded-media, a media ID data inherent to each recorded medium, and a contents ID data pertaining to specific contents information recorded on a recorded medium.

In the practical form for implementing the present invention, information contents are distributed to individual terminal apparatuses owned by individual users from an information supply station via a communication network. Further, ciphered information contents recorded on recorded-media are also distributed to individual terminal apparatuses owned by other users from those terminal apparatuses owned by media owners in possession of recorded-media recorded with contents information and ciphered contents information via a communication network to effect a secondary data distribution process. Further, the owner ID data pertaining to the owner of recorded-media in possession of recorded-media, the media ID data inherent to recorded-media, and the contents ID data pertaining to the ciphered contents information recorded on recorded-media, are respectively delivered from individual terminal apparatuses owned by media owners in possession of recorded-media to a corresponding information supply station as the information pertaining to owners of recorded-media.

Whenever distributed information contents are actually utilized, basic data for assessing chargeable amount via designation of actual rounds of utilizing contents information is delivered to a corresponding information supply station from individual terminal apparatuses owned by individual information users every predetermined term. On receipt of this basic data, the corresponding information supply station processes the received data for assessing chargeable amount, whereby generating an integral data pertaining to utilization of contents information by way of individually designating total rounds of utilizing contents information and names of users, for example. This integral data related to the utilization of contents information is then delivered to an information providers to enable them to individually assess chargeable amount against individual users of contents information in correspondence with total rounds of utilization of contents information. Further, a part of the rent for utilizing contents information collected from individual users via the rent charging procedure is distributed to individual owners in possession of recorded-media designated via the data of the owners of recorded-media.

The invention will now be described by way of example with reference to the accompanying drawings, throughout which like parts are referred to by like references, and in which:
FIG 1 is an overall schematic diagram of individual components introduced for constituting an information distribution system according to the present invention;
FIG. 2 is an illustration for designating a data allocation of an optical disc to which the present invention is applied;
FIG. 3 is a classification chart designating arrangement of an ISRC (International Standard Recording Code);
FIG. 4 is a block diagram designating a construction of each of a terminal apparatus for implementing the present invention;
FIG. 5 is a chart designating a first method for distributing the information of the present invention;
FIG. 6 is a chart designating a second method for distributing the information of the present invention;
FIG. 7 is a chart designating a construction of the information subject to distribution;
FIG. 8 is a chart designating a third method for distributing the information of the present invention;
FIG. 9 is a chart designating a fourth method for distributing the information of the present invention;
FIG. 10 is a block diagram designating an arrangement of an apparatuses for processing an utilized information in the present invention; and
FIG. 11 is a chart designating data on the utilization of information contents cumulated on the part of a server of the present invention.

Referring now to the accompanying drawings, one of practical forms for implementing the present invention is described below.

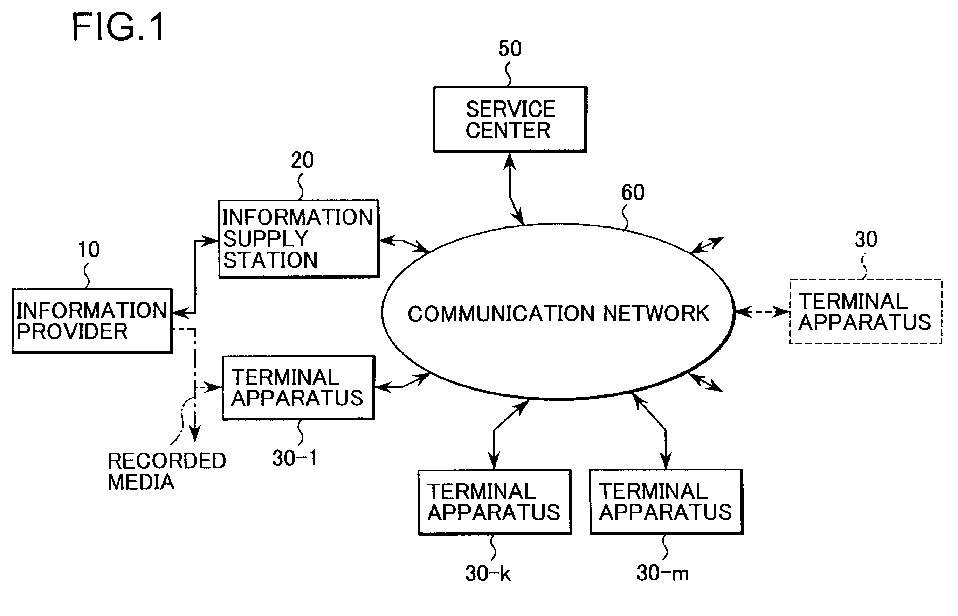

FIG. 1 designates an overall construction of an information distributing system pertaining to the present invention. An information provider 10 is substantially a registered original title owner authorized to supply information contents such as musical works, movies or the like. For example, in the case of distributing musical tunes as the information contents, a record company or a production company becomes the information provider 10. In order to publicly promote information contents such as musical tunes reserved with own copyrights, the above information provider 10 supplies such a contents information requiring distribution to an information supply station 20, and yet, converts the objective information contents into digital format and then records said contents on a recording medium before delivering the recorded information contents on the market. Accordingly, an individual information user applies two kinds of method to gain access to the relevant information contents including such a means to download desired information contents from the information supply station 20 into his own terminal apparatus 30 via a communication network 60 and another means for purchasing a recorded medium recorded with the desired information contents such as a conventional CD (Compact Disc). It is also possible for an individual information user acquiring the desired information contents to distribute the identical information contents to other information users via the communication network 60 in order to execute the secondary distribution.

On the other hand. after ciphering the information contents demanded from the terminal apparatus 30 own by an individual information user via the communication network 60, the information supply station 20 transmits the ciphered information contents for downloading to the terminal apparatus 30 owned by the individual information user. Further, the information supply station 20 exchanges communication with individual terminal apparatuses 30 to obtain data designating actual rounds of the usage of information contents on the part of the individual terminal apparatuses 30 before summing up total rounds of the usage of individual information contents per terminal apparatus owned by each user. Further, the information supply station 20 also accesses to the data pertaining to the owner of recorded-media in order to discernibly control those information users who purchased individual recorded-media recorded with specific information contents.

Each of the terminal apparatuses 30 is provided with a secret key inherent to each of them. Such a common key required for deciphering ciphered information delivered via the communication network 60 is acquired by utilizing the secrete key. Each of the terminal apparatuses 30 deciphers the ciphered information by applying a common key before externally delivering the deciphered information, and yet, it also sums up total rounds of the usage of the deciphered information contents. Further, each of the terminal apparatuses 30 effects a secondary distribution procedure by way of transmitting ciphered information recorded on a recorded medium to other terminal apparatuses 30 via the communication network 60.

A designated service center 50 controls data of ciphering keys provided for the individual terminal apparatuses 30. The service center 50 is accessed by the information supply station 20 and also by each of the terminal apparatuses 30 as required.

Assuming that a recording medium recorded with specific information contents corresponds to an optical disc recorded with digital musical data for example, a practical form for implementing the present invention is described below.

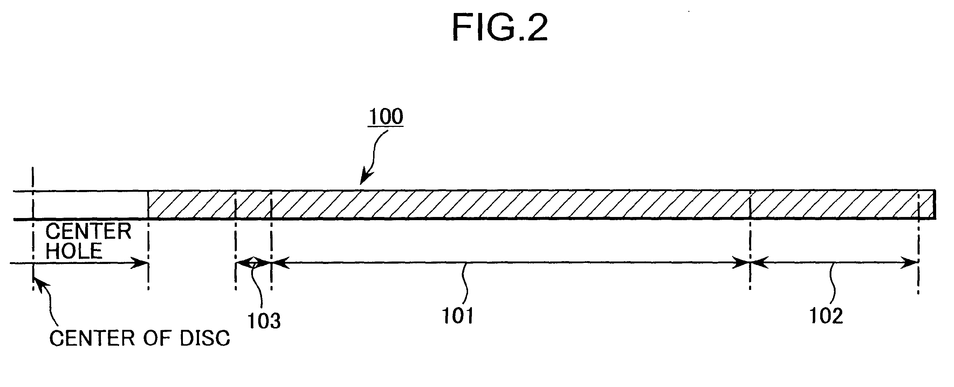

FIG. 2 exemplifies a construction of an optical disc 100 for recording specific information contents. In order that the optical disc 100 can be provided with full compatibility with any of conventional CD (Compact Discs), a CD data section 101 is formed as shown in FIG. 2. In addition, a ciphered data section 102 provided with such a recording density higher than that of the CD data section 101 is formed outside of the periphery of the CD data section 101. In addition, a medium ID data section 103 is formed inside of the periphery of the CD data section 101.

Like the case of any of the CDs, digital data related to a TOC (Table Of Contents) and music tunes are recorded on the CD data section 101. On the other hand, the ciphered data section 102 is recorded with digital data of the music tunes identical to that is recorded on the CD data section 101 by way of previously compressing the volume of data and ciphering the music tunes. To deal with an extremely large volume of data, a common key applied ciphering method with faster processing speed is utilized for ciphering digital music data. To implement the common key applied ciphering method, inasmuch as a variety of methods such as the DES (Data Encryption Standard) or the one using a key with longer length than that of the DES is proposed, the embodiment of the present invention introduces these methods.

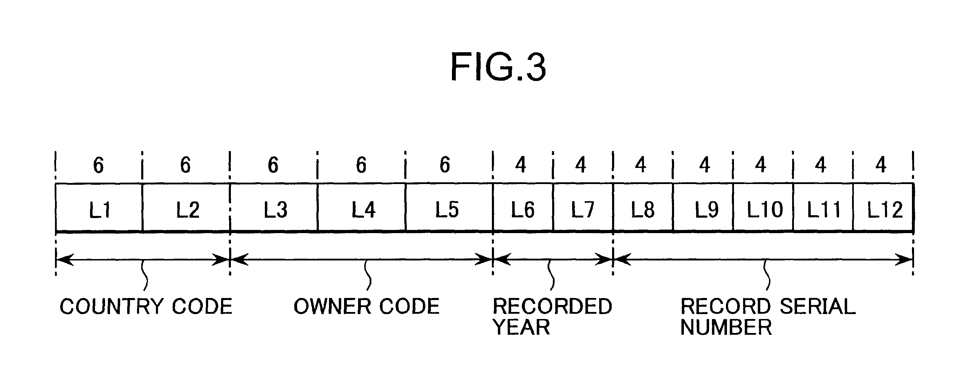

Assume that digital music data recorded on the ciphered data section 102 contains such a music tune data capable of discerning individual music tunes such as an ISRC (International Standard Recording Code) shown in FIG. 3, for example. According to the rule of the ISRC, a code corresponding to a specific country is clarified by designation of 6-bit data signals L1 and L2, whereas owner's code is designated by means of 6-bit data signals L3, L4 and L5. On the other hand, the year of the recording is designated by means of 4-bit data signals L6 and L7, whereas serial numbers of individual records are designated by means of 4-bit signals L8 to L12. By way of inserting individual digital bit data conforming to the ISRC standard into the digital music data recorded on the ciphered data section 102 in due order, it is possible to obtain music tune data on the way of reproducing digital music data, whereby making it possible to easily discern actual duration of the usage of a specific digital music tune, for example.

Such a medium ID data inherent to an individual optical disc like the serial numbers of optical disc is recorded on a medium ID data section 103 formed inside of the periphery of the CD data section 101. A common key Kc used for ciphering digital music data is recorded on the CD data section 101 or the medium data section 103.

As mentioned above, by way of recording digital music data and ciphered digital music data on the optical disc 100, even when utilizing any of conventional optical disc apparatuses, it is possible to normally reproduce digital music data recorded on the optical disc 100. Further, by way of providing an optical disc apparatus with communicating function, it is also possible to effect a secondary distribution of ciphered digital data to other information users.

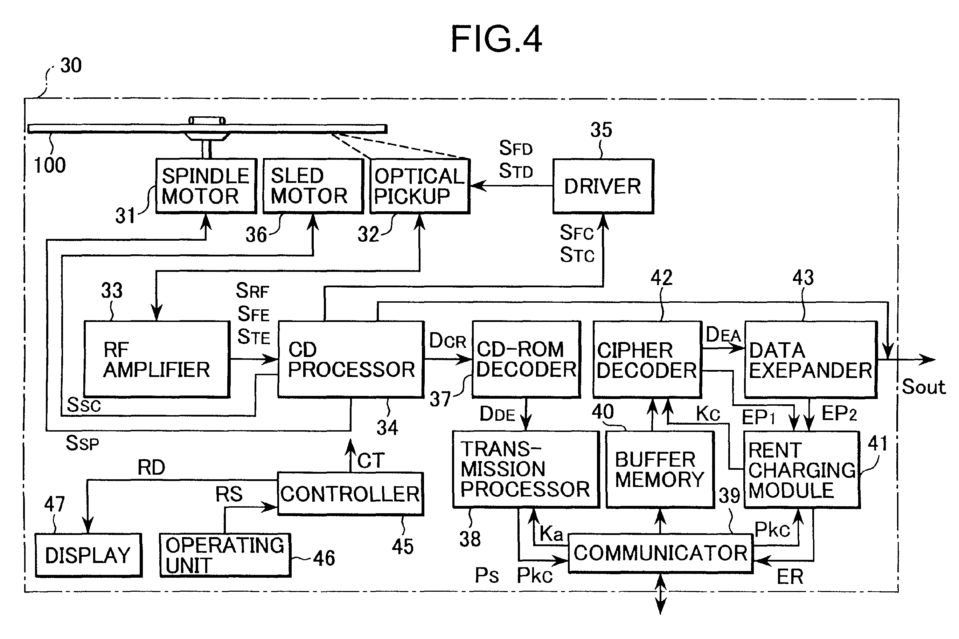

FIG. 4 is a concrete block diagram designating a construction of a terminal apparatus 30 which is capable of reproducing digital music tune data recorded on the optical disc 100 shown in FIG. 2 and also capable of distributing ciphered digital music tune data recorded thereon, and yet, also capable of reproducing ciphered digital music tune data obtained via the communication network 60.

The optical disc 100 is rotated by a spindle motor 31 at a predetermined rotating speed. The spindle motor 31 is driven by means of a rotation controlling signal S_{SP} transmitted from a CD processor 34 described later on in order that the speed of the rotation of the optical disc 100 can remain at a predetermined rotating speed.

The optical disc 100 is irradiated with power controlled laser beams emitted from an optical pickup 32, and yet, laser beams reflected from the optical disc 100 irradiate a photo detector (not shown) of the optical pickup 32. The photo detector comprises a split beam detector, which generates a voltage signal corresponding to the reflected beams via photo-electric conversion and current-voltage conversion before delivering thus generated voltage signal to an RF (Radio Frequency) amplifier 33.

Based on the voltage signal from the optical pickup 32, the RF amplifier 33 generates a reading signal S_{RF}, a focus error signal S_{FE}, and a tracking error signal S_{TE}, and then delivers these signals to the CD processor 34.

On the other hand, based on the received focus error signal S_{FE}, the CD processor 34 generates a focus controlling signal S_{FC} for controlling an object lens (not shown) of the optical pickup 32 in order that focus position of the laser beams can exactly match the position of recording layers of the optical disc 100, and then delivers the focus controlling signal S_{FC} to a driver 35. Further, based on the received tracking error signal S_{TE}, the CD processor 34 generates a tracking control signal S_{TC} for controlling the object lens of the optical pickup 32 in order that laser beam irradiating position can coincide with the center position of the desired track, and then delivers the tracking control signal S_{TC} to the driver 35. Further, in order that the laser beam irradiating position will not outreach the tracking controllable range, the CD processor 34 generates a sled controlling signal S_{SC} for causing the optical pickup 32 to be shifted in the diametric direction of the optical disc 100, and then delivers the sled controlling signal Ssc to a sledding motor 36. Based on the received sled controlling signal Ssc, the sledding motor 36 causes the optical pickup 32 to be shifted in the diametric direction of the optical disc 100.

On the other hand, based on the focus controlling signal S_{FC}, the driver 35 generates a focus driving signal S_{FD}, and yet, based on the tracking control signal S_{TC}, the driver 35 also generates a tracking drive signal S_{TD}. By causing the driver 35 to feed the generated focus driving signal S_{FD} and tracking drive signal S_{TD} to an actuator (not shown) of the optical pickup 32, position of the object lens is controlled, whereby controlling laser beams so that laser beams can precisely be focused at the center position of a desired track.

Further, the CD processor 34 compensates for asymmetry of the received reading signal S_{RF} and then converts the corrected reading signal S_{RF} into binary digital signal. Next, the CD processor 34 executes an EFM (Eight to Fifteen Modulation) demodulation process against the binary digital signal, and yet, it also executes a process for correcting error of the CIRC (Cross Interleave Reed-Solomon Code). In the case of reproducing digital music tune data recorded on the CD data section 101 of the optical disc 100, the digital signal complete with the process for correcting error of the CIRC code is then filtered out to limit frequency bands. The band limited digital signal is then converted into a corresponding analog signal before output from the terminal apparatus 30 as an audio output signal S_{OUT}.

Further, in the case of reproducing ciphered digital music tune data recorded on the ciphered data section 102 and also reproducing the medium ID data section 103 of the optical disc 100, the digital signal complete with the process for correcting error of the CIRC code is delivered to a CD-ROM decoder 37 as a signal D_{CR}. Further, by way of detecting synchronization between frames, the CD processor 34 generates a rotation controlling signal S_{SP} in order that the optical disc 100 can be rotated at a desired rotating speed, and then delivers this rotation controlling signal S_{SP} to the spindle motor 31.

The CD-ROM decoder 37 executes a de-scrambling process against the signal D_{CR} delivered from the CD processor 34, and yet, executes an error correcting process by applying an added error correcting signal such as an ECC (Error Checking and Correction) code, and then delivers this signal to a transmission processor 38 as a signal D_{DE}.

A communicator 39 is connected to the transmission processor 38. When an public key Ka is acquired from the service center 50 linked with the communicator 39 via the communication network 60, using the public key Ka, the transmission processor 38 generates a ciphered common key data Pkc by way of ciphering the common key Kc recorded on the optical disc 100. When the common key Kc is recorded on the medium ID data section 103, using the signal D_{DE}, the transmission processor 38 generates the ciphered common key data Pkc. When the common key Kc is recorded on the CD data section 101, after receiving a signal designating the common key Kc from the CD processor 34, the transmission processor 38 generates the ciphered common key data Pkc.

Further, using the signal D_{DE}, the transmission processor 38 also generates a secondary distribution data Ps designating ciphered digital music tune data recorded on the ciphered data section 102. The communicator 39 transmits a pair of ciphered common key data Pkc to the portion at which the ciphered common key data Pkc is generated.

Further, when the ciphered common key data Pkc designating the ciphered common key Kc used for decoding distributed information and data respectively consisting of the ciphered digital music tune data is transmitted via the communicator 39, a distribution data P consisting of ciphered digital music tune data is provisionally stored in a buffer memory 40, whereas the ciphered common key data Pkc is transmitted to a rent charging module 41.

The rent charging module 41 stores a plurality of secret keys Kr inherent to individual terminal apparatuses. Using the secret key Kr, the rent charging module 41 decodes the ciphered common key data Pkc in order to deliver the decoded common key Kc to a cipher decoder 42. Upon completion of preparation for deciphering the ciphered digital music tune data, the rent charging module 41 reads the distribution data P provisionally stored in the buffer memory 40, and then transmits the readout distribution data P to the deciphering decoder 42.

Using the common key Kc delivered from the rent charging module 41, the cipher decoder 42 decodes the readout distribution data P and then generates a data signal D_{EA} which remains without being ciphered. The data signal D_{EA} is then transmitted to a data expander 43 to treat the data signal D_{EA} with an expanding process. The expanded digital data is then filtered out to limit frequency bands. Finally, the band limited digital signal is converted into the corresponding analog audio output signal S_{OUT} before eventually being output from the terminal apparatus 30.

By way of discerning music tunes and the number of music tunes decoded by the cipher decoder 42 or by way of discerning music tunes and reproducing duration of music tunes from the digital data complete with an extension process executed by the data extender 43, the rent charging module 41 generates usage data signals EP1 and EP2 designating the amount of the usage of music tunes and then transmits both signals to the rent charging module 41.

Based on the received usage data signals EP, the rent charging module 41 sums up the actual rounds thus far used per music tune and then generates a rent charging reference data ER designating actual rounds of utilizing rental music sources per music tune within a specific term per elapse of a predetermined period of time, and then transmits the reference data ER to the information supply station 20. Alternatively, in response to the request from the information supply station 20, the rent charging module 41 generates the rent charging reference data ER, which is then transmitted to the information supply station 20 via the communicator 29.

Not only the communication with the information supply station 20 linked via the communication network 60 and with other terminal apparatuses 30, but the communicator 39 also executes such a verification process as the one described later on as well.

A controller 45 is fitted with an operating unit 46 and a display unit 47. Of these, the operating unit 46 establishes and switches a variety of operations of each terminal apparatus 30. After activating operation of the operating unit 46, when an operating signal RS is transmitted to the controller 45, based on the received operating signal RS, the controller 45 generates a controlling signal CT for delivery to individual operating components, and then controls operation of respective operating components so that desired operations can be implemented. Further, a display signal RD is supplied to the display unit 47 to display the actual operating status of each terminal apparatus 30.

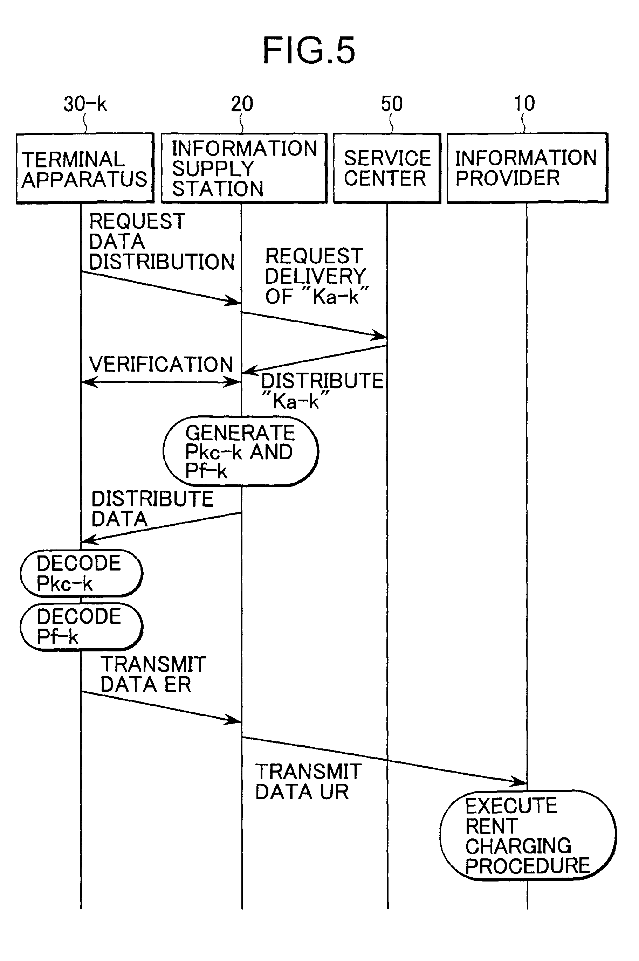

Next, a method of distributing information for distributing digital music tune data as information contents is described below. FIG. 5 represents a chart for explanation of a first method for distributing information. The chart shown in FIG. 5 designates the case in which specific information contents are transmitted from the information supply station 20 to the terminal apparatus 30. In the case of distributing digital music tune data as the contents of information, in particular, because of a vast amount of digital music tune data, the contents are ciphered. When distributing the ciphered contents of digital music tune data from the above information supply station 20, the above-referred common key ciphering format with an extremely fast processing speed is utilized. Further, when distributing a ciphered common key Kc used for ciphering data to be distributed, in order to readily decode the ciphered common key Kc without obliging the information supply station 20 and the terminal apparatus 30 to jointly keep such a ciphering key used for ciphering data to be distributed, by way of utilizing an public key applied ciphering format, the common key Kc is ciphered by an public key Ka before distributing the ciphered public key Ka as a ciphered common key data Pkc.

In order to realize the public key ciphering format, either the RSA (Rivest, Shamir and Adleman) ciphering format or the elliptic curve ciphering format is proposed, and thus these ciphering formats are introduced for implementing a practical embodiment of the present invention. It should be noted that the public key Ka is open to the public as of the state accessible from the information supply station 20 and the individual terminal apparatuses 30. Control of the public key Ka is executed by way of registering it as an open database to the service station 50 shown in FIG. 1, for example.

When distributing specific digital music tune data via the communication network 60, it is so arranged that the above-referred information provider 10 shall previously deliver specific contents of digital data requiring distribution to the information supply station 20 to enable the supply station 20 to effect distribution of the specified digital data contents therefrom.

As shown in FIG. 5, when a request for distribution of specific contents of data is generated by the terminal apparatus 30-k against an information supply station 20, in response to that, the information supply station 20 generates a request for delivery of an public key Ka-k corresponding to the terminal apparatus 30-k being the requesting source against a service center 50. In response, the service center 50 delivers the public key Ka-k of the terminal apparatus 30-k to the information supply station 20. The delivered public key Ka-k constitutes one part of a pair of keys, where the other part is constituted by a secret key Kr-k held by the terminal apparatus 30-k.

Next, the information supply station 20 executes a verification process against the terminal apparatus 30-k. By implementing the verification process, the information supply station 20 confirms legitimacy of the terminal apparatus 30-k. The verification process checks and confirms whether the counterpart terminal apparatus 30-k is the proper one bearing a secret key Kr-k or not. To implement this, for example, the information supply station 20 transmits random digits. In return, the terminal apparatus 30-k ciphers the delivered random digits by applying the secret key Kr-k, and then transmits the ciphered random digits back to the information service station 20. On the other hand, the information supply station 20 inversely converts the delivered random digits by applying an public key Ka-k delivered from the service center 50 in order to check to see if the transmitted random digits will properly be reproduced or not. This enables the information supply station 20 to correctly identify whether the counterpart terminal apparatus is the proper one or not. It is allowable for implementing the verification process to utilize an electronic signature based on an public key ciphering format called "digital signature". When implementing the digital signature, it is defined that the corresponding terminal apparatus 30-k should transmit the digital data ciphered by means of the secret key Kr-k to the information supply station 20, for example. In the case in which if correct data are duly reproduced by decoding the ciphered digital data delivered from the corresponding terminal apparatus 30-k by applying the secret key Ka-k, this enables the information supply station 20 to identify that the corresponding terminal apparatus 30-k is the proper one. In terms of the digital signature technology, the above-referred RSA (Rivest, Shamier and Adleman) ciphering format, the Elgamal signature format based on discrete logarithm issue, and the DSA (Digital Signature Algorithm) format, are known.

When the above information supply station 20 identifies that the terminal apparatus 30-k demanding the contents of specific data is the legitimate one, then the information supply station 20 ciphers the common key Kc used for ciphering digital music tune data by means of the public key Ka-k of the terminal apparatus 30-k delivered from the service center 50, whereby generating the ciphered common key data Pkc-k. Further, using the common key Kc, the information supply station 20 ciphers the demanded digital music tune data and then compresses the ciphered digital music tune data to decrease the amount of data before generating a primary distribution data Pf-k. Next, the information supply station 20 delivers the ciphered common key data Pkc-k and the primary distribution data Pf-k as a pairing unit to the terminal apparatus 30.

The terminal apparatus 30-k delivers the ciphered common key data Pkc-k received from the information supply station 20 to the rent charging module 41 as shown in FIG. 4 to enable the rent charging module 41 to decode the ciphered common key data Pkc-k by applying the secrete key Kr-k. Next, the terminal apparatus 30-k delivers the obtained common key Kc to the cipher decoder 42, and yet, it also delivers the primary distribution data Pf-k received from the information supply station 20 to the cipher decoder 42. The primary distribution data Pf-k is then decoded by applying the common key Kc and then extended by the data expander 43, whereby making it possible to generate such a music tune audio output signal S_{OUT} free from being ciphered.

By way of monitoring decoding process executed by the cipher decoder 42, the rent charging module 41 computes total rounds of the usage of digital information contents per music tune. In the course of computing actual rounds of the utilization of individual music tunes, actually utilized music tunes can be identified by utilizing digital music tune data such as the ISRC code as described earlier. Based on the amount of decoded data, time spent for reproducing individual music tunes, or the number of reproduced music tunes, actual amount of usage is determined. Thenceforth, whenever a predetermined period of time is past, the terminal apparatus 30-k transmits a rent charging reference data ER designating actual rounds of the usage of individual music tunes in a predetermined term to the information supply station 20. Alternatively, in response to the request from the information supply station 20, the terminal apparatus 30-k transmits the rent charging reference data ER to the information supply station 20.

The information supply station 20 sums up the rent charging reference data ER transmitted from individual terminal apparatuses 30, and then provides the information provider 10 with an usage log data UR designating a total amount of the usage of individual music tunes. The information provider 10 is authorized to charge the rent on the utilized music data in correspondence with the result of utilizing individual music tunes per individual terminal apparatus against the corresponding terminal apparatus 30 based on a conventional pre-paid card or credit card.

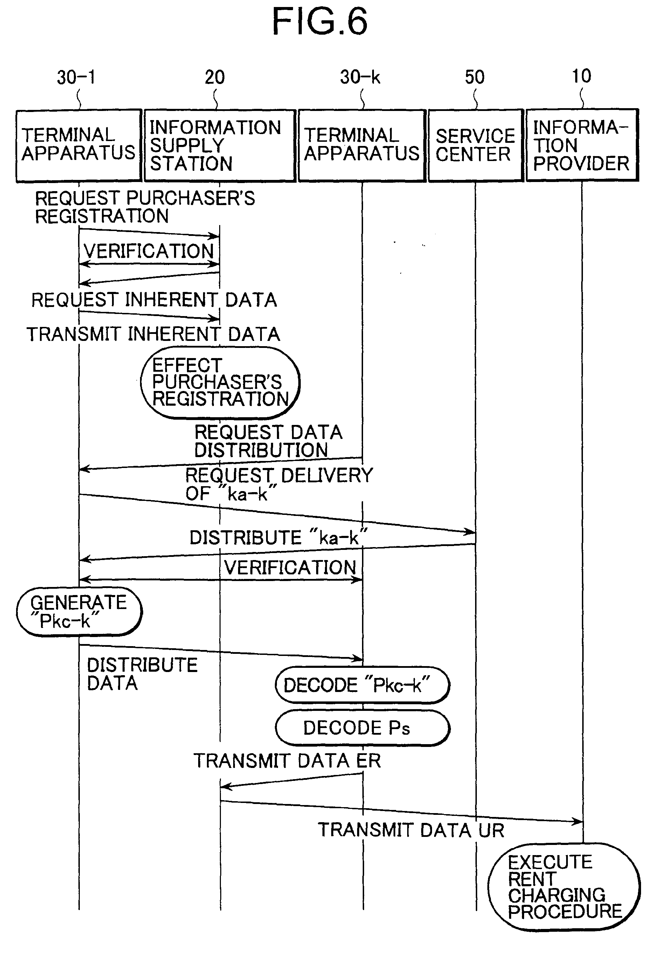

Referring now to a chart designating secondary distribution of digital music tune data shown in FIG. 6, a method of implementing a secondary distribution of data contents is described below. When an information user purchases the optical disc 100 recorded with ciphered digital music tune data as shown in FIG. 2, by way of inserting the optical disc 100 into the terminal apparatus 30-1 for example owned by the above information user, the purchaser requests the information supply station 10 for registration of the purchaser himself.

By implementing the above-described verification process against the terminal apparatus 30-1, the information supply station 20 checks and confirms legitimacy of the terminal apparatus 30-1. When it is identified that the terminal apparatus 30-1 subject to a request from a purchaser for his registration is the proper one, the information supply station 20 reads such a medium ID data inherent to each optical disc recorded on the medium ID data section 103 of the optical disc 100, for example, the information supply station 20 reads a serial number from the terminal apparatus 30-1. Next, the information supply station 20 provides the information provider 10 with a media owner data UB comprising the readout serial number, and an owner ID data inherent to each terminal apparatus, for example, for designating the terminal apparatus 30-1 which has readout the serial number, or such an owner ID data (designating address, name, or a registered number of a credit card owned by the purchaser) received from the operating unit 46 shown in FIG. 4 necessary for specifying the serial number and the owner of the optical disc 100, and such a contents ID data designating a specific music tune which is recorded on a recorded-media and enables secondary distribution thereof. By virtue of the registration of a purchaser of the optical disc 100, it is possible for the information provider 10 to properly control individual owners of the optical disc 100.

In the case of secondary distributing a specific digital music tune data to another user upon completion of a primary distribution of the digital music tune data via the sale of the optical disc 100, when another terminal apparatus 30-k requests the terminal apparatus 30-1 for delivery of the above data contents, in response, the terminal apparatus 30-1 requests the service center 50 for delivery of an public key Ka-k corresponding to the terminal apparatus 30-k being the requesting source. In return, the service center 50 delivers the public key Ka-k of the terminal apparatus 30-k to the terminal apparatus 30-1. The delivered public key Ka-k constitutes one part of a pair of keys, where the other part is constituted by a secret key Kr-k held by the terminal apparatus 30-k.

Next, the terminal apparatus 30-1 executes a verification process against the terminal apparatus 30-k in order to check and confirm legitimacy of the terminal apparatus 30-k. When the terminal apparatus 30-1 identifies that the terminal apparatus 30-k requesting delivery of information is the proper one, the transmission processor 38 of the terminal apparatus 30-1 ciphers the common key Kc recorded on the optical disc 100 by applying the public key Ka-k of the terminal apparatus 30-k delivered from the service center 50 and then generates a ciphered common key data Pkc-k. Further, the transmission processor 38 delivers the ciphered common key data Pkc-k and the secondary distribution data Ps comprising digital music tune data recorded on the ciphered data section 102 of the optical disc 100 and a data Jn inherent to the optical disc 100 recorded on the medium ID data section to the terminal apparatus 30-k as a pairing unit.

On the part of the terminal apparatus 30-k, the ciphered common key data Pkc-k delivered from the terminal apparatus 30-1 is transmitted to the rent charging module 41, which then decodes the ciphered common key data Pkc-k by applying the secret key Kr-k, and then delivers the obtained common key Kc to the cipher decoder 42. Further, the terminal apparatus 30-k delivers the secondary distribution data Ps to the cipher decoder 42 to decode the common key Kc by applying the common key Kc. The decoded data is then extended by the data extender 43 before eventually generating a music tune audio output signal S_{OUT}.

While monitoring a decoding process executed by the cipher decoder 42, the rent charging module 41 computes total rounds of the usage of the digital information contents per music tune. Thenceforth, whenever a predetermined period of time is past, the terminal apparatus 30-k transmits a rent charging reference data ER designating total rounds of the usage of music data per music tune within a predetermined period of time to the information supply station 20. Alternatively, in response to the request from the information supply station 20, the terminal apparatus 30-k transmits the rent charging reference data ER to the information supply station 20. Further, on the part of the rent charging module 41, in order to identify the used condition of individually decoded digital music tune data recorded on individual optical discs by way of discerning the individually corresponding optical discs, the data Jn inherent to the optical disc delivered from the terminal apparatus 30-1 pairing with the secondary distribution data Ps is included in the rent charging reference data ER.

Based on the rent charging reference data ER delivered from individual terminal apparatuses 30, the information supply station 20 generates a contents utilized data US designating the result of the use of individual music tunes on the part of individual terminal apparatuses 30, and then delivers the contents utilized data US to the information provider 10. This in turn enables the information provider 10 to execute a rent charging procedure in correspondence with the result of the use of digital music tune data per terminal apparatus against all the terminal apparatuses 30. Further, inasmuch as a media owner data UB is delivered from the information supply station 20, by way of utilizing the data Jn inherent to each optical disc included in the rent charging reference data ER, it is possible for the information supply station 20 to discern actual status of the digital music tune data recorded on such optical discs respectively being utilized for secondary distribution after being bought by registered users. This in turn enables the information supply station 20 to control actual condition of the distribution of digital music tune data out from the registered users.

According to the above-described system for implementing the secondary data distribution, such a ciphered digital music tune data recorded on an optical disc 100 is distributed from the terminal apparatus 30-1 to the other terminal apparatus 30-k. On the other hand, it is also possible for the secondary data distributing system to distribute the already distributed ciphered digital music tune data from the terminal apparatus 30-k to the other terminal apparatus 30-m, for example. In this case, when the terminal apparatus 30-m requests the terminal apparatus 30-k for distribution of the digital music tune data, it is so arranged that such processes further than the process to cause the terminal apparatus 30-k to request the terminal apparatus 30-1 for delivery of contents of information according to the secondary distribution system will be executed. In this case, it is so arranged that the common key Kc decoded by the rent charging module 41 is ciphered by applying an public key Ka-m of the terminal apparatus 30-m received from the service station 50 in order to generate a ciphered common key data Pkc-m. Next, the above-referred data Jn inherent to the optical disc recorded on the medium ID data section 103 of the optical disc 100 delivered from the terminal apparatus 30-1 is again added to the ciphered common key data Pkc-m and also to the secondary distribution data Ps delivered from the terminal apparatus 30-1. Further, such a routed apparatus data Q-k designating re-distribution of data from the terminal apparatus 30-k is also added to the above-referred data Pkc-m and Ps, and then, the added data are respectively delivered to the terminal apparatus 30-m.

It is so arranged that the terminal apparatus 30-m can gain access to the common key Kc by way of decoding the ciphered common key data Pkc-m by applying a secret key Kr-m of the terminal apparatus 30m. It is also possible for the terminal apparatus 30-m to decode the secondary distribution data Ps by applying the common key Kc. Further, when transmitting the rent charging reference data ER from the terminal apparatus 30-m to the information supply station 20, not only the utilized music tunes and the actual rounds of use, but the data inherent to an optical disc owned by the user who initiated secondary distribution of music data between users and the routed apparatus data are also transmitted in the state being included in the rent charging reference data ER.

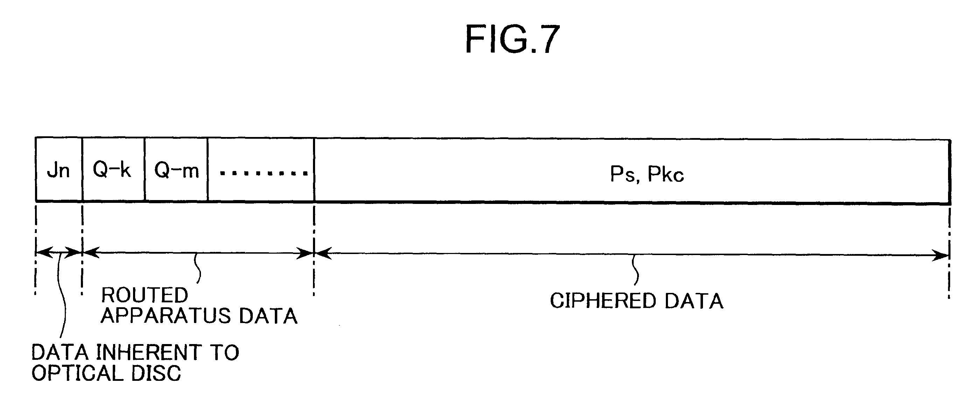

As mentioned above, in the course of re-distributing the secondary distribution data Ps, as is apparent from FIG. 7, it is so arranged that the data Jn inherent to each optical disc is added to the secondary distribution data Ps being the ciphered digital music tune data and also to the ciphered common key data Pkc, and then, a plurality of routed apparatus data Q-k, Q-m, ...designating respective terminal apparatuses 30 thus far routed, are serially added to the above data Ps and Pkc. Further, it is also arranged that, not only the data on the utilized music tunes and the data on the utilized amount of music tunes, but the serially added routed apparatus data are also included in the rent charging reference data ER to be transmitted to the information supply station 20. This in turn enables the information provider 10 to effectively recognize the route of distributing digital music tune data on the part of users.

According to the above-described data distribution system, the common key Kc is distributed by utilizing an public key ciphering method. However, it is also possible to distribute the data subject to distribution and the common key used for ciphering the data subject to distribution by applying the common key ciphering method.

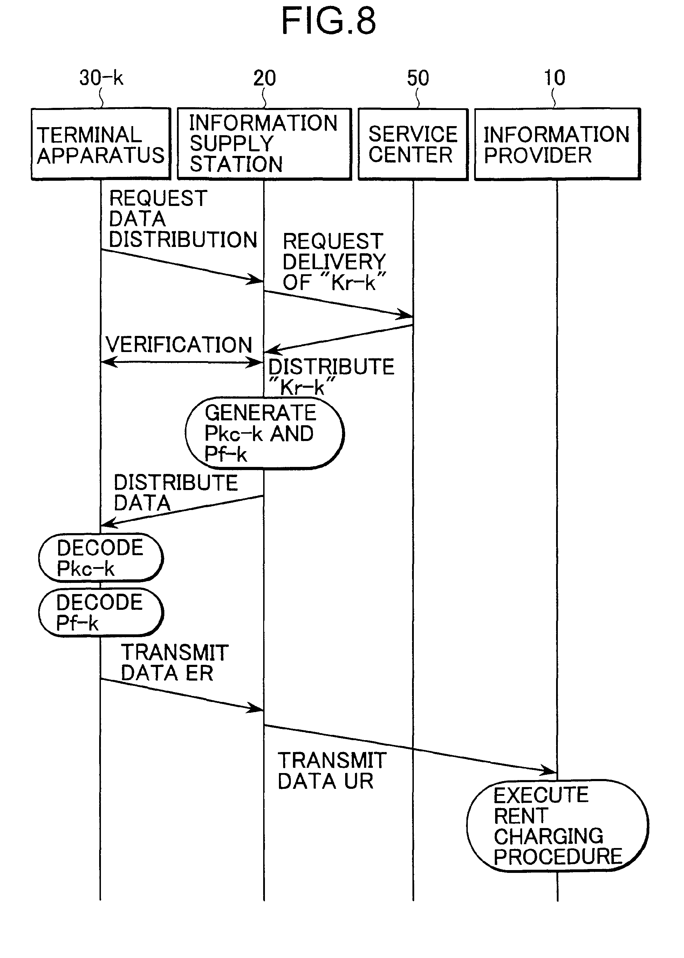

Referring now to a chart shown in FIG. 8, a procedure for implementing a primary method of distributing data contents is described below for explanatory of a third method of distributing data when applying a common key ciphering method to effect distribution of a common key. It should be noted that the rent charging module 41 provided for an individual terminal apparatus 30 memorizes a secret key Kr inherent to each terminal apparatus. Further, in order to utilize the common key ciphering system, the secret key Kr is bilaterally used for ciphering and deciphering the common key Kc.

Database of the secret key Kr is controlled by the service center 50. In other words, only the service center 50 is allowed to manage the secret key Kr corresponding to the individual terminal apparatuses 30. Further, it is so arranged that the information supply station 20 is entitled to acquire the secrete key Kr by way of accessing the service center 50, whereas each of the terminal apparatuses 30 is not allowed to acquire the secret key Kr.

When the terminal apparatus 30-k requests the information supply station 20 for delivery of contents of specific information, in return, the information supply station 20 demands the service center 50 for delivery of a secret key Kr-k exactly corresponding to the terminal apparatus 30-k being the source of this request. In return, the service center 50 delivers the secret key Kr-k of the terminal apparatus 30-k to the information supply station 20.

Next, the information supply station 20 executes a verification process against the terminal apparatus 30-k, and then, confirms legitimacy of the terminal apparatus 30-k in accordance with the procedure described above. Concretely, when the information supply station 20 duly identifies that the terminal apparatus 30-k being the source of the request is the proper one, by applying the secret key Kr-k of the terminal apparatus 30-k delivered from the service center 50, the information supply station 20 ciphers a common key Kc used for ciphering digital music tune data, and then generates a ciphered common key data Pkc-k. Further, using the common key Kc, the information supply station 20 ciphers the requested digital music tune data. Next, the ciphered data is compressed to decrease the amount of data before eventually generating the primary distribution data Pf-k. The ciphered common key data Pkc-k and the primary distribution data Pf-k pairing with each other are then distributed to the terminal apparatus 30-k.

Next, the terminal apparatus 30-k transmits the ciphered common key data Pkc-k received from the information supply station 20 to a rent charging module 41 shown in FIG. 4, and then decodes the ciphered common key data Pkc-k by applying the secret key Kr-k. A common key Kc obtained via the decoding process is then delivered to the cipher decoder 42. Next, the primary distribution data Pf-k is delivered to the cipher decoder 42 so that it can be decoded via the common key Kc. The decoded data Pf-k is then treated with an expansion process by a data expander 43 before eventually causing a music tune audio output signal S_{OUT} to be output as of the state free from being ciphered.

On the other hand, by way of monitoring a decoding process executed by the cipher decoder 42, the rent charging module 41 computes the actually used amount of individual music tunes. Thenceforth, whenever a predetermined period of time is past, the rent charging module 41 transmits a rent charging reference data ER designating a total amount of the usage per music tune during a predetermined period of time to the information supply station 20. Alternatively, in response to the request from the information supply station 20, the rent charging reference data ER is transmitted from the terminal apparatus 30-k to the information supply station 20.

By summing up the rent charging reference data ER collected from individual terminal apparatuses 30, the information supply station 20 provides the information provider 10 with an usage log data designating a total amount of the individual music tunes utilized by individual terminal apparatuses 30. This in turn enables the information provider 10 to charge to the individual terminal apparatuses 30 for the payment of rent in correspondence with the actual status of the utilization of music tunes per terminal apparatus 30.

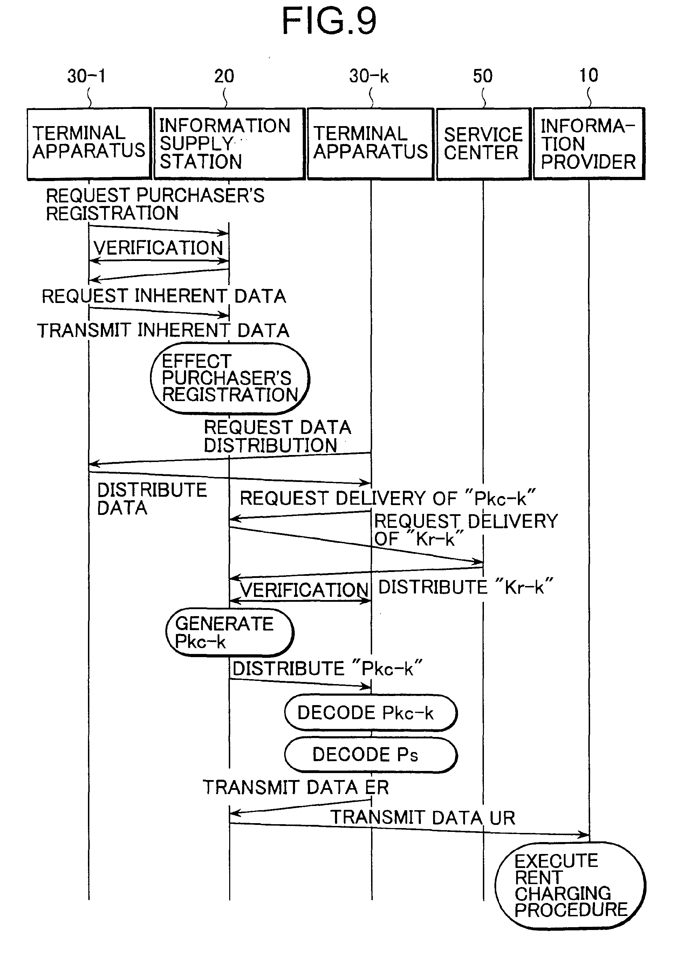

Referring now to a chart shown in FIG. 9, a procedure for implementing a secondary distribution of digital music tune data by applying a common key ciphering is described below for explanatory of a fourth method of distributing data. When an information user purchase an optical disc 100 recorded with ciphered digital music tune data shown in FIG. 2, by inserting the optical disc 100 into a terminal apparatus 30-1 owned by this information user, for example, the user requests the information supply station 20 for effecting registration of this user.

Initially, the information supply station 20 executes a verification process against the terminal apparatus 30-1 in order to check and confirm legitimacy of the terminal apparatus 30-1. When it is identified that the terminal apparatus 30-1 purchased by the registered user is the proper one, the information supply station 20 reads a medium ID data inherent to an individual optical disc recorded on the medium ID data section 103 of the optical disc 100 and a contents ID data designating such music tunes recorded on the optical disc 100 so as to enable users to perform a secondary distribution procedure out from the terminal apparatus 30-1, and then, provides the information provider 10 with a media owner data UB comprising the above-referred readout data and the owner ID data capable of specifying the owner of the optical disc 100 by way of pairing both data with each other.

When secondarily distributing the ciphered digital music tune data recorded on the optical disc 100 to other users, assume that another terminal apparatus 30-k requests the terminal apparatus 30-1 for delivery of the digital music tune data, in response, the terminal apparatus 30-1 provides the terminal apparatus 30-k with a ciphered secondary distribution data Ps recorded on the ciphered data section 102 of the optical disc 100 and a data Jn inherent to each optical disc recorded on the medium ID data section 103 by pairing both data with each other. It is also allowable for the terminal apparatus 30-1 to execute a process for verifying the terminal apparatus 30-k before effecting transmission of the data, and then, after confirming legitimacy of the terminal apparatus 30-k, transmission of relevant data may be implemented.

The terminal apparatus 30-k provisionally stores the secondary distribution data Ps in the buffer memory 40, and yet, also stores the data Jn inherent to each optical disc in the rent charging module 41. Further, in order to acquire a common key Kc necessary for decoding the secondary distribution data Ps, the terminal apparatus 30-k requests the information supply station 20 for delivery of a ciphered common key data Pkc-k.

In response to this request, the information supply station 20 acquires the secret key Kr-k of the terminal apparatus 30-k from the service center 50, and then, based on the method identical to the case of the primary distribution process, executes a verification process against the terminal apparatus 30-k in order to check and confirm legitimacy of the terminal apparatus 30-k. When the verifying process has successfully confirmed legitimacy of the terminal apparatus 30-k, the information supply station 20 ciphers the common key Kc by means of a secret key Kr-k acquired from the service center 50 being equal to the secret key Kr-k memorized in the terminal apparatus 30-k. In this way, the information supply station 20 generates a ciphered common key data Pkc-k and then delivers this data to the terminal apparatus 30-k.

Next, the terminal apparatus 30-k delivers the ciphered commonkey data Pkc-k fed from the information supply station 20 to the rent charging module 41, which then decodes the ciphered common key data Pkc-k by applying the secret key Kr-k memorized in the terminal apparatus 30-k, and then delivers the acquired common key Kc to the cipher decoder 42. When the common key Kc has been acquired, a secondary distribution data Ps stored in the buffer memory 40 is delivered to the cipher decoder 42 and then decoded by means of the common key Kc. Then, the decoded secondary distribution data Ps is extended by a data extender 43 before eventually generating a music tune audio output signal S_{OUT} free from being ciphered.

While monitoring the decoding process executed by the cipher decoder 42, the rent charging module 41 computes total rounds of the use of digital information contents per music tune. Thenceforth, whenever a predetermined period of time is past, the terminal apparatus 30-k transmits a rent charging reference data ER designating a total amount of the used digital music tune data within a specific period of time per music tune to the information supply station 20. Alternatively, in response to the request from the information supply station 20, the terminal apparatus 30-k transmits the rent-charging reference data ER to the information supply station 20. Further, as mentioned above, in order to discern the individual results of using the decoded digital music tune data recorded on individual optical discs, such a data Jn inherent to individual optical discs supplied in conjunction with the secondary distribution data Ps pairing with each other is also included in the rent charging reference data ER.

Next, based on the rent charging reference data ER transmitted from each of the terminal apparatuses 30, the information supply station 20 generates a contents utilization data UR designating total rounds of the utilization of individual music tunes on the part of respective terminal apparatuses 30, and then delivers this contents utilization data UR to the information provider 10. This in turn enables the information provider 10 to impose the rent on individual terminal apparatuses 30 in correspondence with the result of utilization of digital music tune data on the part of individual terminal apparatuses 30, and yet, also enables the information provider 10 to precisely control the actual amount of data contents distributed by individually registered users.

In the case of distributing such a cipher-free digital music tune data owned by the terminal apparatus 30-1 to the terminal apparatus 30-k, in the same way as is done for the information supply station 20 in the above-referred first and third data distributing systems, it is allowable to distribute the above-referred digital music tune data after being ciphered.

Any of the above-described terminal apparatuses 30 provisionally stores the primary distribution data Pf-k and the secondary distribution data Ps in the buffer 40 and then decodes the primary and secondary distribution data Pf-k and Ps via the operation of the rent charging module 41 to decode the common key Kc. Instead, it is also allowable to initially acquire the ciphered common key Pkc-k to decode the common key Kc and then receive delivery of the first distribution data Pf and the secondary distribution data Ps.

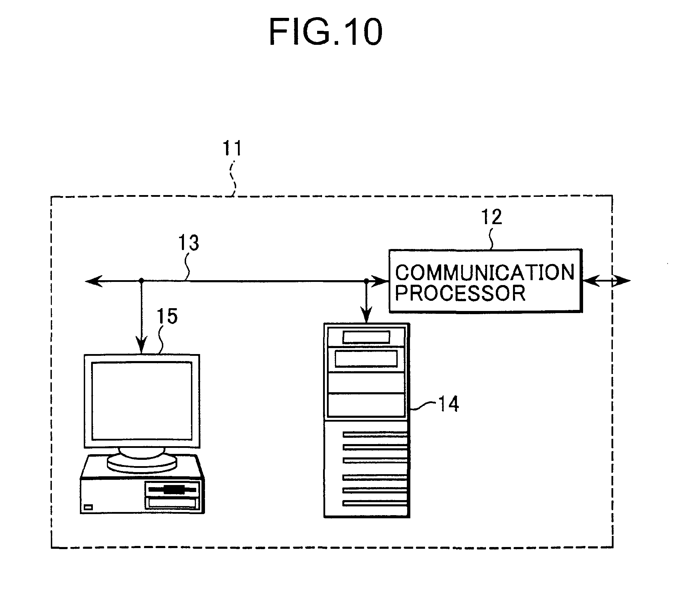

FIG. 10 represents a schematic diagram of a utilized information processing apparatus 11 for executing a rent charging procedure by applying a contents utilized data US fed from the information supply station 20 on the part of the information provider 10. A communication processor 12 of the utilized information processing apparatus 11 is linked with the information supply station 20 via a network using such a conventional public communication line or a private telecommunication line. The communication processor 12 is linked with a server 14 and a client personal computer 15 via a LAN (Local Area Network) 13.

In the utilized information processing apparatus 11, the server 14 serially cumulates a media owner data UB and the contents utilized data US delivered from the information supply station 20, and in addition, the client personal computer 15 reads the data contents cumulated in the server 14 in order to execute the rent charging procedure.

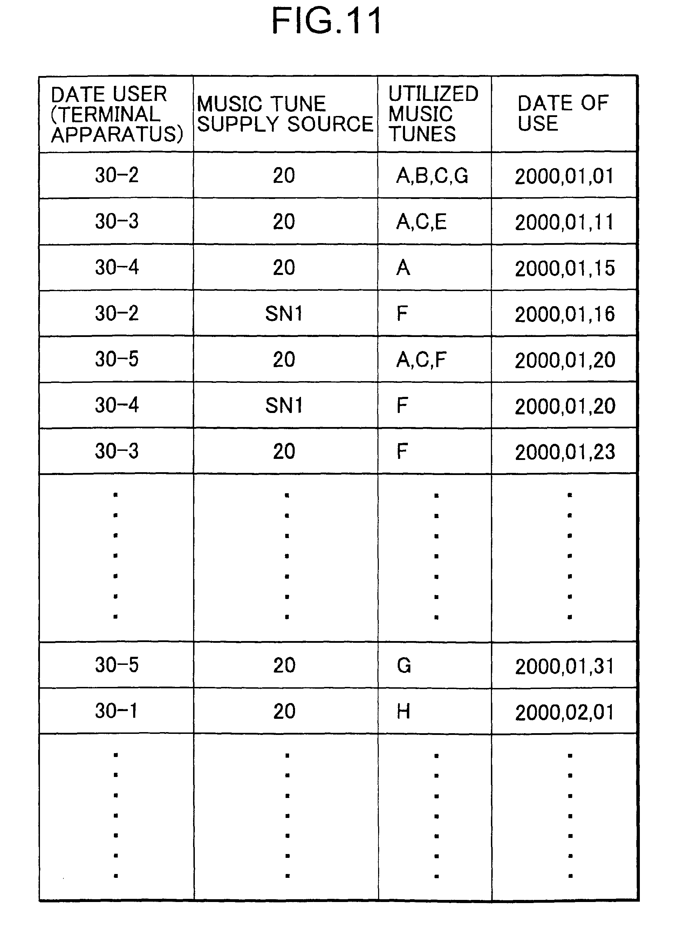

FIG. 11 represents an aspect of the contents utilized data US stored in the server 14 including the data for discernibly identifying individual data users, data designating the source of acquiring music tunes, data of utilized music tunes, and the data designating dates of utilizing music tunes.

For example, when a certain digital music tune data is delivered from the information supply station 20 via the communication network 60 as the primary distribution contents, the client personal computer 15 selects such a numerical data "20" designating the information supply station as the source of acquiring the corresponding music tune data, and yet, using the selected data, the client personal computer 15 also discernibly identifies the status of utilizing music tune data on the monthly basis (for example, for a period from January 1, to January 31, 2000) or on the weekly basis per terminal apparatus 30-1 or 30-2, for example. Accordingly, it is possible to impose the rent corresponding to the total rounds of utilizing the digital music tune data contents against individual users in possession of individual terminal apparatuses 30.

Further, when a ciphered data recorded on an optical disc is delivered via the secondary distribution, by way of selecting such a numerical data different from "20" being the source of acquiring the relevant music tune data, it is possible to correctly identify total rounds of utilization per optical disc on the part of individual terminal apparatuses 30. Further, it is also possible to correctly identify every detail of data contents recorded on individual optical discs owned by individual registered users, whereby making it possible to confirm how far the registered purchasers of the optical disc have individually contributed to the re-distribution of the digital music tune contents data.

By virtue of the above arrangement, it is possible for the information provider 10 to impose the rent on individual registered users for the total amount of utilized music tunes by way of serially detecting all the data corresponding to individual items from the media owner data UB and the contents utilized data US stored in the server 15 by operating the client personal computer 15. Further, based on the data related to the dates of utilization of the data contents and the data related to the names of utilized music tunes, actual status of utilization of the data contents on the monthly basis (for example, for a period from January 1 to January 31, 2000) or on the weekly basis can correctly be discerned per music tune "A" or "B". This in turn enables the information provider 10 to effect payment of a proper amount of rent against individual copyrighted parties.

In the above description, it is so arranged that, based on the contents utilized data US, a proper amount of rent is imposed on individual information users in correspondence with the utilized music tunes and the total rounds of use. It is also allowable for individual users of individual terminal apparatuses 30 to previously purchase a specific right for utilization of music tune data for a predetermined number of rounds corresponding to the amount of advance payment effected via a pre-paid card for example from the information provider 10 or from the information supply station 20, whereby enabling each terminal apparatus 30 to approve utilization of information contents by the rounds corresponding to the purchased right. Even when introducing this method, every detail of the utilized music tunes and the rounds of use thereof is delivered from each of the terminal apparatuses 30 to the information supply station 20 to enable the information provider 10 to correctly identify actual status of the utilization of individual music tunes by way of referring to the contents utilized data US.

When the information provider 10 has earned a certain amount of profit after deducting the royalties and expenses from the turnover generated by the distribution of data contents via the communication network 60 and the sale of optical discs, it is possible for the provider 10 to distribute the earned profit against owners of individually registered optical discs as the one entitled to share the dividend.

For example, in the case in which profit "M1" that can be shared with the owners of the optical discs recorded with a music tune "A" has been earned, where the number of owners of the optical discs recorded with the music tune "A" is assumed to be "N", the client personal computer 15 computes the dividend "M1/N", whereby further executing a process for distributing the dividend to individual owners of the corresponding optical discs.

As described above, it is possible for individual registered owners of optical discs to not only enjoy music tunes recorded on an optical disc, but they can further earn a higher share of dividend by promoting the utilization of music tunes by way of distributing digital music tune data, thus enhancing additive value of the purchased optical discs.

Further, in addition to the dates of utilization of the digital music tune data and the names of music tunes utilized, by way of utilizing such a data related to the source of acquiring music tunes, for example, it is also possible to discern the period actually required to effect secondary distribution of a music tune "A" recorded on an optical disc bearing a serial number "SN1" for example based on a predetermined period of time. Referring to FIG. 11, in terms of the source of acquiring specific music tunes, the numeral "20" designates the information supply station 20, whereas "SN1" designates that ciphered digital music tune data is distributed via the secondary distribution stage from an optical disc bearing a serial number "SN1". Because of this, the client personal computer 15 divides sharable profit "M1" into "M2" and "M3", and then executes a process for distributing a dividend corresponding to "M2/M1" to individual owners of the optical discs each bearing a serial number "SN1" for example. The profit "M3" is subject to distribution in correspondence with the degree of contribution to the distribution of a specific music tune. Concretely, when it is identified that the rounds of the usge of a music tune "A" correspond to rounds "K" whereas total rounds of effecting the secondary distribution of the music tune "A" correspond to rounds "K1", then the client personal computer 15 executes a process for distributing the dividend expressed in terms of "M3 x K1/K" against the registered owners of the optical discs each bearing a serial number "SN1".

The above-described embodiment has enabled the server 14 provided for the information provider 10 to memorize the media owner data UB therein. Instead, it is also allowable to control the media-owner data UB discretely from the information provider 10 to enable the provider 10 to memorize the contents utilized data US therein.

For example, by way of arranging that the media owner data UB is controlled by the information supply station 20 and by way of enabling the information supply station 20 to utilize a data Jn inherent to each optical disc included in the rent charging reference data ER, it is possible to discernibly identify whether such a digital music tune data recorded on an optical disc owned by a specific purchaser under registration is utilized for the secondary distribution or not. Because of this, when feeding the contents utilized data US from the information supply station 20 to the information provider 10, by way of feeding such a data designating actual degree of applying the digital music tune data recorded on optical discs of individual registered purchasers to the secondary distribution, it is possible to properly distribute the dividend in correspondence with the degree of contribution to the distribution of corresponding music tunes.

Further, by way of controlling the media owner data UB discretely from the information provider 10, the amount of the dividend earned via the possession of a corresponding optical disc increases to result in the enhanced value of the optical disc. In the case of establishing such a system for converting optical discs into securities for distribution, renewal and control of the media owner data UB can properly and effectively be implemented.

As mentioned above, if it is practicable to distribute profit corresponding to the rounds of use or the amount of the re-distributed data via distribution of such a contents data recorded on an optical disc owned by a registered purchaser, by way of promoting distribution of the contents of digital music-tune data, the registered purchaser and the owner of such a terminal apparatus who executed re-distribution of digital music tune data will be able to gain a greater share of the dividend, thus activating distribution of the digital music tune data.

Further, even when such a case ever occurs, in which a certain digital music tune data free of ciphering is illegally distributed to result in the decreased profit on the part of the registered purchasers, in order to prevent the share of the dividend from being decreased due to distribution of illegal data contents, by causing the registered purchaser entitled to share the dividend to positively follow up surveillance, illegal music tune data can be prevented from being distributed.

In other words, any of conventional purchasers of musical compact discs pays the price for purchasing a desired compact disc as an equivalent price to the repeated enjoyment of the purchased music tune. On the other hand, any of the purchasers of an optical disc based on the system conforming to the present invention possesses such a digital music tune data free of ciphering recorded on a conventional CD data domain and pays a certain equivalent price not only for repeated listening enjoyment of the recorded music tunes, but he also pays a certain price for the potential value expected for the dividend when the recorded music tunes are extendedly listened by many listeners to result in the accrual of rent charged on the listened music tunes. If the dividend is periodically distributed, this in turn corresponds to the dividend provided for securities. By way of purchasing such an optical disc recorded with a certain music tune capable of generating long lasting popularity, periodic distribution of the dividend can be expected. This in turn means that transferable securities are purchased. Further, when such an optical disc recorded with a new music tune is provided on the market, it is so conceived that this optical disc will be purchased not only for audibly enjoying the recorded music tune, but the user will also purchase such an optical disc in correspondence with potential value of the music tune recorded thereon in anticipation of growing popularity in the future. Further, if the number of optical disc purchaser increases in anticipation of the dividend, it will render a great advantage on the part of the information provider 10 because of the feasibility to collect expenses spent for activities to promote music tunes in a relatively early period of time.

More particularly, it is possible for the information provider 10 to establish such a system for enabling owners of optical discs to earn dividend accrued from the owned securities. In this case, operation for implementing rent charging and distribution of the dividend is automatically processed by utilizing a network and computers.

Normally, there are many cases in which contents of digital information are subject to a plurality of complex rights like the case of music and video works. Under the present circumstances, it is difficult to circulate contents of digital information via a net work premising that utilization of said contents is subject to payment of rent charges. It is not realistic that individual optical disc users individually deal with complex rights whenever utilizing contents of digital information. As a means to deal with this problem, it is also practicable to previously deal with plural rights by concluding contracts to integrate them as an original right, and then fractionalize the original right into securities in order to facilitate distribution of the contents of digital information via networks.

It should be understood that the above description of the practical forms for embodying the present invention has solely referred to the case of recording digital music tune data on an optical disc, however, digital data subject to recording is not solely limited to music tunes, but object of recording may also include video data or movies and computer software or the like. Further, recording medium is also not solely limited to an optical disc, but usable recording medium may also include a magnetic disc utilizing magnetism and a memory card utilizing semiconductor elements. It should also be understood that the scope of the present invention is not solely limited to the above-described embodiments thereof, but the present invention may also be implemented by way of a variety of modifications and changes within such a scope that does not deviate from the essentials of the invention.

According to the present invention, such a process for imposing rent on users of information utilizing contents of digital information distributed via a communication network is executed. And yet, at least part of the rent charged on the utilization of the contents of digital information collected from the users of said information via the rent charging process is distributed to the owners of recorded-media recorded with the contents of digital information. By virtue of this arrangement, even after distributing contents of digital information via a communication network, it is possible to continuously follow up distribution of recorded-media recorded with the contents of digital information.

Further, by way of distributing ciphered contents of digital information and decoding said contents of digital information, said contents information is practically utilized. This in turn prevents said contents of digital information from illegally being utilized, and yet, utilization of said contents information is correctly discerned. Further, inasmuch as each of recorded-media is recorded with said contents of digital information in the state being free of ciphering and also in the ciphered state, any user who purchased a recorded medium can freely utilize the contents data free of being ciphered, and yet, he can secondarily distribute the ciphered contents of digital information to other users of digital information.

Further, a medium ID data inherent to an individual medium is recorded on each of recording media , and then a media-owner database is formed by way of reproducing the media ID data, thus making it possible to easily distribute the rent receipts to owners of the recorded-media. Further, a media ID data inherent to an individual medium is recorded on each recording medium, and thus, in the case of effecting a secondary distribution of ciphered contents of digital information to other users of digital information, by way of adding the ciphered contents data to the media ID data, it is possible to recognize the degree of the contribution of individual media owners to the distribution of the contents of digital information.

## Claims

1. A charged rent distribution system for contents information comprising:
a media owner database for integrally storing
an owner ID data pertaining to owners in possession of recorded media;
a medium ID data proper to each of said recorded media; and
a contents ID data pertaining to specific contents of information recorded on said recorded medium;
a receiving means for receiving a contents utilized data designating utilization of said specific contents data by individual users;
a rent charging means for charging rent on the utilization of data contents against said users of said contents information based on said received contents utilized data; and
a distributing means for distributing at least part of said rent for utilization of said contents information collected from said users resulted from said rent charging procedure based on said media owner data base.

2. The charged rent distribution system for contents information according to Claim 1, wherein
utilization of said specific contents information is executed by causing each of said information users to decode such a ciphered contents information comprising said ciphered specific contents information.

3. The charged rent distribution system for contents information according to Claim 1, wherein
said recording medium is recorded with said specific contents information in the state being ciphered.

4. The charged rent distribution system for contents information according to Claim 3, wherein
said recording medium is also recorded with said ciphered contents information comprising said ciphered specific contents information.

5. The charged rent distribution system for contents information according to Claim 1, wherein
said recording medium is recorded with said media ID data.

6. The charged rent distribution system for contents information according to Claim 5, wherein
said media owner data base is formed based on information delivered from an individual owner in possession of said recorded medium via said network after reproducing said media ID data recorded on a recording medium.

7. A charged rent distribution system for contents information comprising;
means for receiving contents utilized data designating utilization of specific contents information by an user via a network;
means for charging rent for the utilization of said contents information against said information user based on said received contents user information; and
a distributing means for distributing at least a part of rent imposed on the utilization of said contents information collected from said information by means of said rent charging means based on information from a media owner data base integrally storing an owner ID data pertaining to individual owners in possession of recorded media, a media ID data proper to said recorded media, and a contents ID data pertaining to said specific contents information recorded on said recording media.

8. A charged rent distribution system for contents information comprising:
a contents owner database for integrally storing
a contents owner ID data pertaining to owners of contents information; and
a contents ID data pertaining to specific contents of information;
a receiving means for receiving contents utilized data designating utilization of said specific contents information by individual users;
a rent charging means for charging rent on the utilization of contents information against said users based on said received contents utilized data; and
a distributing means for distributing at least part of said rent for utilization of said contents information collected from said users to said owners of said contents information based on said media owner data base.

9. The charged rent distribution system for contents information according to Claim 8, wherein
utilization of said specific contents information is executed by causing each of said information users to decode such a ciphered contents information.

10. The charged rent distribution system for contents information according to Claim 8, wherein
said contents information is recorded on a recording medium with said specific contents information in the state being ciphered.

11. The charged rent distribution system for contents information according to Claim 10, wherein
said recording medium is also recorded with said ciphered contents information comprising said ciphered specific contents information.

12. The charged rent distribution system for contents information according to Claim 8, wherein
said media ID data is recorded on a recording medium.

13. A method for distributing charged rent for contents information comprising the steps of:
integrally storing an owner ID data pertaining to owners in possession of recorded-media; a medium ID data inherent to each of said recorded-media; and a contents ID data pertaining to specific contents of information recorded on said recorded medium;
receiving a contents utilized data designating utilization of said specific contents data by individual users of information;
charging rent on the utilization of data contents against said users of said contents information based on said received contents utilized data; and
distributing at least part of said rent for utilization of said contents information collected from said information users resulted from said rent charging procedure based on said media owner database.

14. The method for distributing charged rent for contents information according to Claim 13, wherein
utilization of said specific contents information is executed by causing each of said information users to decode such a ciphered contents information comprising said ciphered specific contents information.

15. An information terminal apparatus for accessing contents information through a network comprising:
communication means coupled to a communication network;
buffer memory means connected to said communication means;
signal processing means connected to said buffer memory means for recovering signal to be utilized form; and
rent charging means coupled to both said signal processing means and said communication means to detect rent of the contents information; wherein
said communication means transmits rent information detected by said rent charging means to a service center connected to said communication network.

16. The information terminal apparatus according to Claim 15, further comprising:
optical disc reproducing device for reproducing an optical recording medium; wherein
said contents information is reproduced from said optical recording medium by said optical disc reproducing device instead of accessing via the communication network.
